# DEMANDE DE BREVET EUROPEEN

(11) **EP 0 533 563 A1**
(43) Date de publication de la demande: **24.03.1993**
(21) Numéro de dépôt: 92402536.4
(22) Date de dépôt: 16.09.1992
(51) Int. Cl.: H02G 15/14, H01R 4/70

(54) **Jonction entre un câble principal et un câble de dérivation et câble de mesure présentant une telle jonction**

(30) Priorité: 18.09.1991 FR 9111508
(71) Demandeur: FILOTEX, F-91210 Draveil (FR)
(72) Inventeur: Fontaine, Michel, F-08170 Haybes (FR); Manise, André, F-08170 Haybes (FR)
(74) Mandataire: Pothet, Jean Rémy Emile Ludovic

(57) **Abrégé**

Câble de mesure comportant:
- un câble principal comprenant une âme principale isolée par une gaine d'étanchéité et constituée chacun d'un toronnage de brins conducteurs principaux eux-mêmes constitués d'un toronnage de fils conducteurs,
- une pluralité de câbles de dérivation raccordant chacun, au niveau d'une jonction, ladite âme principale respectivement à un composant électronique, chacun desdits câbles de dérivation comprenant une âme secondaire isolée par une gaine d'étanchéité et constituée d'un toronnage de brins conducteurs secondaires eux-mêmes constitués chacun d'un toronnage de fils conducteurs,
- des surmoulages entourant chacune desdites jonctions ainsi qu'une portion dudit câble principal et dudit câble de dérivation de ladite jonction en débordant sur lesdites gaines d'étanchéité respectives dudit câble principal et dudit câble de dérivation, pour assurer l'étanchéité de ladite jonction, caractérisé en ce que chacun desdits brins secondaires est raccordé à l'un desdits brins principaux au moyen d'un fil conducteur massif.

## Description

La présente invention concerne une jonction entre un câble principal et un câble de dérivation, particulièrement dans un câble de mesure à dérivations étanche aux hautes pressions de fluides. De tels câbles trouvent une utilisation tout particulièrement dans la mesure de température ou de pression par exemple à différentes profondeurs sous l'eau. Ils sont en général traînés par des bateaux ou des sous-marins.

Plus précisément, un câble de mesure classique comprend un câble principal dont l'âme conductrice est divisée, c'est-à-dire qu'elle est constituée d'un toronnage de plusieurs brins conducteurs isolés les uns des autres, chaque brin étant lui-même constitué d'un toronnage de plusieurs fils conducteurs. Il est en effet connu de l'homme de l'art que les câbles à âme massive sont trop rigides pour être immergés, transportés et installés dans un milieu en mouvement permanent et sont plutôt utilisés dans les installations fixes ; c'est pourquoi une structure plus souple à âme divisée est préférable pour l'utilisation en milieu sous-marin par exemple. Afin de remplir son rôle de mesure, le câble principal est connecté à des capteurs, de pression ou de température par exemple, qui sont disposés les uns à la suite des autres tout le long du câble, et reliés chacun électriquement à ce dernier au moyen de câbles dits de dérivation également à âme divisée. La jonction entre chaque capteur et le câble de dérivation correspondant est effectuée par l'intermédiaire d'un presse-étoupe classique garantissant son étanchéité. La jonction entre le câble de dérivation et le câble principal au niveau de chaque dérivation est protégée de manière étanche par un surmoulage en un matériau isolant. De manière bien connue, aussi bien l'âme du câble principal que celles des différents câbles de dérivation sont isolées du milieu extérieur par une première gaine d'étanchéité, dite gaine intermédiaire, en un matériau isolant, elle-même entourée d'une armure puis d'une seconde gaine d'étanchéité, dite gaine extérieure, également en un matériau isolant ; cet ensemble de trois protections est appelé tout simplement gaine d'étanchéité.

Pour donner un exemple concret de la structure d'un tel câble, on peut considérer un câble principal dont l'âme est constituée d'un toronnage de 56 paires de brins conducteurs, et qui est destiné à supporter 20 capteurs. Chaque câble de dérivation comporte une âme à quatre brins isolés toronnés entre eux. Ainsi, pour raccorder chaque capteur au câble principal, on connecte les quatre brins de l'âme du câble de dérivation dénudée à cet effet respectivement à quatre brins de l'âme du câble principal également dénudée au niveau de la jonction, puis on rétablit la protection du câble principal et du câble de dérivation ainsi raccordés en surmoulant autour de la jonction un matériau isolant tel qu'un polyuréthane. Le câble principal a donc deux rôles essentiels : un rôle mécanique de porteur des capteurs, et un rôle électrique de transmission des signaux depuis les capteurs jusqu'à l'électronique de bord.

En pratique, les câbles de mesure sont immergés à 500 ou 600 mètres sous l'eau, et supportent des pression allant jusqu'à 80 bars. Lors de la mise à l'eau, du tirage et de l'installation de ces câbles, notamment dans des zones comportant de nombreux rochers, ou bien lorsque ces câbles se trouvent à la portée d'ancres de navires par exemple, il y a de grandes chances que l'étanchéité des câbles de dérivation ou des presse-étoupes soit affectée. Du fait de la pression importante à laquelle sont soumis ces câbles, l'eau chemine rapidement à l'intérieur des âmes divisées et circule de capteur en capteur, provoquant des courts-circuits rendant ainsi ces derniers inutilisables et empêchant un fonctionnement, même partiel, du câble de mesure. Ceci est non seulement préjudiciable au bon fonctionnement de l'installation, mais également à son coût, car les équipements détériorés sont très onéreux.

Pour remédier à ce problème, dû en grande partie à la structure des âmes divisées laissant de nombreux interstices propices à la circulation de l'eau entre les différents brins, mais également accentué par le fait qu'au niveau de la jonction elle-même, il existe des interstices entre les brins raccordés et le surmoulage, on a pensé à remplir ces interstices de produits garantissant l'étanchéité tels que des gelées de pétrole ou des gelées à base de silicones.

Toutefois, cette solution n'apporte pas entière satisfaction, car on a constaté que l'eau pénètre tout de même dans le câble principal et détruit encore plusieurs capteurs. Ces câbles ne sont donc pas suffisamment étanches pour être totalement fiables et conserver un fonctionnement partiel même lors de la pénétration d'eau.

De plus, de tels câbles sont onéreux car les produits garantissant l'étanchéité utilisés sont coûteux.

Un but de la présente invention est donc de réaliser un câble de mesure peu onéreux dans lequel, sous de fortes pressions, la pénétration de l'eau au niveau d'un capteur est limitée à ce seul capteur, et dont le coût de fabrication est équivalent à celui d'un câble de mesure sans produits d'étanchéité supplémentaires.

Un autre but de cette invention est de préserver les composants électroniques du câble et d'assurer une utilisation, même partielle, de ce dernier en cas de pénétration d'eau.

La présente invention propose à cet effet une jonction entre un câble principal et un câble de dérivation, ledit câble principal comprenant une âme principale isolée par une gaine d'étanchéité et constituée d'un toronnage de brins conducteurs principaux eux-mêmes constitués chacun d'un toronnage de fils conducteurs, et ledit câble de dérivation comprenant une âme secondaire isolée par une gaine d'étanchéité et constituée d'un toronnage de brins conducteurs secondaires eux-mêmes constitués chacun d'un toronnage de fils conducteurs, ladite jonction étant protégée par un surmoulage l'entourant et débordant sur lesdites gaines d'étanchéité respectives dudit câble principal et dudit câble de dérivation,
caractérisée en ce que chacun desdits brins secondaires est raccordé à l'un desdits brins principaux au moyen d'un fil conducteur massif.

La présente invention propose également un câble de mesure comportant:
- un câble principal comprenant une âme principale isolée par une gaine d'étanchéité et constituée d'un toronnage de brins conducteurs principaux eux-mêmes constitués chacun d'un toronnage de fils conducteurs,
- une pluralité de câbles de dérivation raccordant chacun, au niveau d'une jonction, ladite âme principale respectivement à un composant électronique, chacun desdits câbles de dérivation comprenant une âme secondaire isolée par une gaine d'étanchéité et constituée d'un toronnage de brins conducteurs secondaires eux-mêmes constitués chacun d'un toronnage de fils conducteurs,
- des surmoulages entourant chacune desdites jonctions ainsi qu'une portion dudit câble principal et dudit câble de dérivation de ladite jonction en débordant sur lesdites gaines d'étanchéité respectives dudit câble principal et dudit câble de dérivation, pour assurer l'étanchéité de ladite jonction; chacun desdits brins secondaires étant raccordé à l'un desdits brins principaux au moyen d'un fil conducteur massif.

Avantageusement, chaque surmoulage peut être constitué d'un matériau dont l'adhérence sur les fils conducteurs massifs est suffisante pour empêcher le passage d'un fluide sous pression entre le surmoulage et ces fils, et adhérant à la gaine d'étanchéité.

Selon un perfectionnement important, une ou plusieurs entretoises, en un matériau identique à celui du surmoulage, et comportant des canaux de passage de l'âme principale et des fils conducteurs massifs peuvent être disposées dans le surmoulage de sorte que l'âme principale et les fils conducteurs massifs les traversent par les canaux de passage correspondants.

Avantageusement lorsque les fils massifs sont en cuivre, le surmoulage peut être en "Desmopan", ou en un matériau choisi parmi le polychloroprène, les élastomères thermoplastiques, les polyoléfines, les polyamides, le polychlorure de vinyle, les polyuréthanes polyester, les polyuréthanes polyéter, les résines bicomposants surmoulables à froid.

Les gaines d'étanchéité peuvent être constituées d'une gaine intermédiaire d'étanchéité en un matériau isolant entourée d'une armure elle-même entourée d'une gaine extérieure d'étanchéité en un matériau isolant.

La gaine intermédiaire et la gaine extérieure sont par exemple en "Estane".

Enfin, lorsque le surmoulage est en "Desmopan", la gaine extérieure peut être en "Estane".

Grâce à l'invention, la pénétration d'eau au niveau d'un capteur est limitée à ce seul capteur.

D'autres caractéristiques et avantages de la présente invention seront maintenant exposés de façon plus détaillée dans le cadre de la description suivante donnée à titre illustratif et nullement limitatif en se référant aux figures annexées dans lesquelles :
- la figure 1 représente de manière très schématique un câble de mesure selon l'invention,
- la figure 2 est une vue en perspective du câble principal de la figure 1,
- la figure 3 est un grossissement de la partie III de la figure 1 avec le surmoulage représenté en coupe,
- la figure 4 représente en perspective une entretoise de la figure 3.

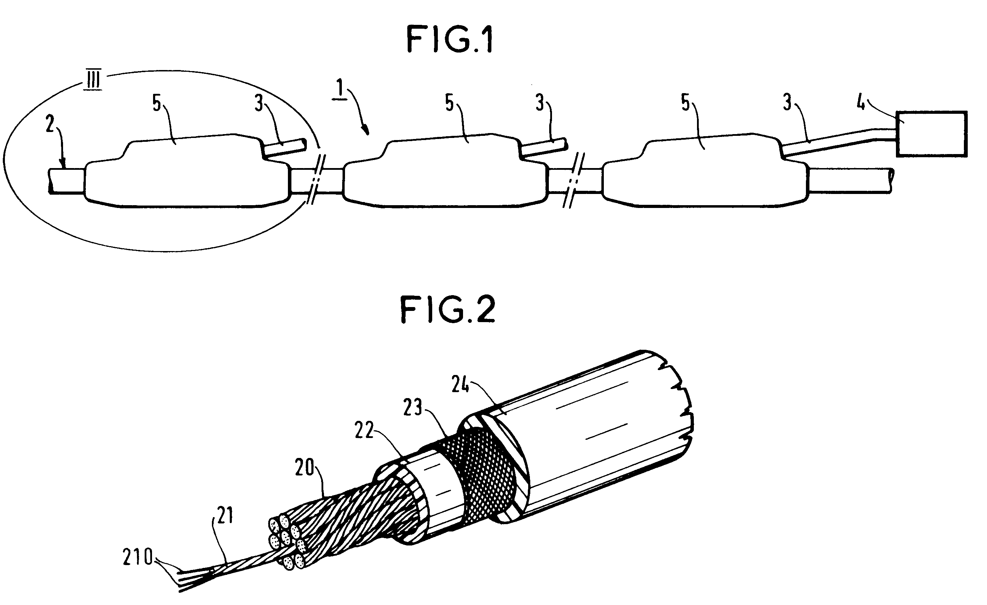

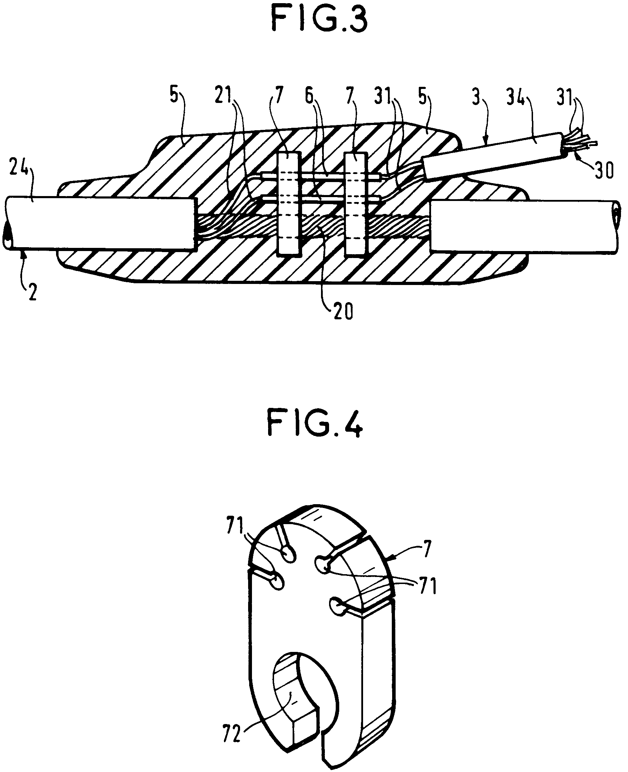

Dans la figure 1, un câble de mesure 1 selon l'invention comprend un câble principal 2 et des câbles de dérivation 3 connectant électriquement des capteurs 4 (dont un seul est représenté) au câble principal 2. La jonction entre chacun des câbles de dérivation 3 et le câble 2 est protégée par un surmoulage d'étanchéité 5 en "Desmopan" (marque déposée) commercialisé par la Société Bayer. Le câble principal 2 (voir figure 2) comporte une âme conductrice divisée 20, dite âme principale, constituée d'un toronnage de brins 21, dits brins principaux, isolés les uns des autres (pour plus de clarté, cette isolation n'est pas représentée), et eux-mêmes constitués d'un toronnage de fils élémentaires de cuivre 210. L'âme 20 est protégée par une gaine intermédiaire d'étanchéité 22 en "Estane" (marque déposée) commercialisé par la société Gooderich, elle-même entourée d'une armure 23 constituée d'une tresse d'acier puis d'une gaine extérieure d'étanchéité 24 également en "Estane". Quant aux câbles de dérivation 3, ils ont chacun la même structure que le câble 2, c'est-à-dire qu'ils comportent chacun une âme divisée 30 (voir figure 3), dite âme secondaire, constituée d'un toronnage de quatre brins 31, dits brins secondaires, isolés les uns des autres et semblables aux brins 21, et protégée par une gaine intermédiaire d'étanchéité (non représentée) en "Estane", une tresse d'acier (non représentée) et une gaine extérieure d'étanchéité 34 également en "Estane". Pour des raisons de clarté de la figure, on n'a pas représenté les presse-étoupes garantissant l'étanchéité des connexions entre les capteurs et les câbles de dérivation.

La figure 3 représente en détail la partie III de la figure 1 où apparaît clairement l'invention.

Selon l'invention, pour effectuer la jonction entre le câble principal 2 et le câble de dérivation 3, quatre des brins 21 (dont deux seulement sont visibles à la figure 3) du câble principal 2, dont l'âme 20 a été dénudée sur une longueur nécessaire pour réaliser la jonction, sont raccordés électriquement par l'intermédiaire de quatre fils de cuivre massifs et non isolés 6 (dont deux seulement sont visibles) respectivement à chacun des quatre brins 31 (dont deux seulement sont visibles) constituant l'âme 30 du câble de dérivation 3 également dénudé à cet effet sur une longueur nécessaire à la jonction. Les fils 6 sont soudés à l'étain-plomb par exemple aux brins 21 et 31. Afin de ne pas créer de courts-circuits entre les quatre fils 6, deux entretoises de séparation et d'espacement 7, dont une vue en perspective est représentée à la figure 4, sont installées autour de l'âme 20 du câble 2. Ces entretoises présentent chacune quatre canaux de passage 71 pour permettre le passage et le positionnement des fils 6, et un canal de passage 72 de l'âme 20. L'ensemble de la jonction avec les entretoises 7 est plongé dans le surmoulage 5. Toujours selon l'invention, le surmoulage 5 est réalisé en "Desmopan", matériau qui a l'avantage d'adhérer au cuivre des fils 6 en ne ménageant pratiquement aucun interstice intermédiaire entre les fils 6 et le surmoulage. En outre, les entretoises 7 sont réalisées dans un matériau semblable à celui du surmoulage 5. Ainsi, une fois le surmoulage effectué, il ne subsiste aucun point faible à l'interface entre les entretoises et le surmoulage. Les entretoises sont alors indissociables du surmoulage.

L'utilisation de fils de cuivre massifs, c'est-à-dire ne présentant aucun interstice de passage de l'eau, associée à celle d'un surmoulage adapté, confère à la jonction et au câble de mesure selon l'invention les propriétés recherchées.

En effet, si l'eau pénètre au niveau d'un capteur, elle chemine entre les brins 31 de l'âme 30 du câble de dérivation connecté à ce capteur. Lorsqu'elle parvient au niveau de la jonction, elle ne peut plus cheminer à l'intérieur des conducteurs puisque ces derniers sont massifs. En outre, l'adhérence du surmoulage sur le cuivre étant très bonne, elle ne peut pas cheminer le long des fils massifs. La pénétration d'eau est donc limitée à un seul capteur, et un fonctionnement partiel du câble de mesure reste assuré. Enfin, grâce aux entretoises 7, aucun court-circuit ne se produit entre les différents brins de la jonction.

D'autre part, le coût d'un câble selon l'invention est environ deux fois plus faible que celui d'un câble de l'art antérieur.

En outre, même ai le "Desmopan" est particulièrement adapté lorsque les fils massifs sont en cuivre, le surmoulage et les entretoises peuvent être constitués de matériau comme le polychloroprène, les élastomères thermoplastiques, les polyoléfines, les polyamides, le polychlorure de vinyle, les polyuréthanes polyester et polyéter. Tous ces matériaux sont surmoulés à chaud. Il est également possible d'employer des résines bicomposants surmoulables à froid.

De la même manière, le principe de l'invention reste valable lorsque les divers éléments conducteurs ne sont plus en cuivre mais en aluminium, en alliage cuivre-cadmium ou en tout autre métal conducteur, du moment que le matériau constituant le surmoulage et les entretoises a une adhérence suffisante sur ce métal.

La gaine extérieure du câble principal et des câbles de dérivation doit être consituée d'un matériau isolant compatible avec celui du surmoulage, afin que ce dernier reste solidaire des deux câbles qu'il relie. Ainsi, lorsque l'on utilise de l'"Estane" pour la gaine extérieure et du "Desmopan" pour le surmoulage, la condition mentionnée ci-dessus est vérifiée. Il est également possible de réaliser la gaine extérieure et le surmoulage dans le même matériau, ou bien d'utiliser tout couple de matériaux compatibles entre eux et garantissant une bonne adhésion entre les câbles et les surmoulages.

L'utilisation des entretoises 7 n'est pas nécessaire. Il peut suffire de prendre soin à bien séparer les fils 6 les uns des autres dans le surmoulage afin d'éviter tout court-circuit. Les fils 6 peuvent être ou non isolés.

L'invention s'applique également aux câbles de mesure dans lesquels une gelée de pétrole ou à base de silicone a été injectée dans les âmes divisées du câble principal et du câble de dérivation.

Enfin, on pourra remplacer tout moyen par un moyen équivalent sans sortir du cadre de l'invention.

## Revendications

**1/** Jonction entre un câble principal et un câble de dérivation, ledit câble principal comprenant une âme principale isolée par une gaine d'étanchéité et constituée d'un toronnage de brins conducteurs principaux eux-mêmes constitués chacun d'un toronnage de fils conducteurs, et ledit câble de dérivation comprenant une âme secondaire isolée par une gaine d'étanchéité et constituée d'un toronnage de brins conducteurs secondaires eux-mêmes constitués chacun d'un toronnage de fils conducteurs, ladite jonction étant protégée par un surmoulage l'entourant et débordant sur lesdites gaines d'étanchéité respectives dudit câble principal et dudit câble de dérivation,
caractérisé en ce que chacun desdits brins secondaires est raccordé à l'un desdits brins principaux au moyen d'un fil conducteur massif.

**2/** Jonction selon la revendication 1, caractérisée en ce que chaque surmoulage (5) est constitué d'un matériau dont l'adhérence sur lesdits fils conducteurs massifs (6) est suffisante pour empêcher le passage d'un fluide sous pression entre ledit surmoulage (5) et lesdits fils (6).

**3/** Jonction selon l'une des revendications 1 ou 2, caractérisée en ce que chacun desdits surmoulages (5) est constitué d'un matériau adhérant à ladite gaine d'étanchéité (22, 23, 24 ; 34).

**4/** Jonction selon l'une des revendications 1 à 3, caractérisée en ce qu'une ou plusieurs entretoises (7), en un matériau identique à celui dudit surmoulage, et comportant des canaux de passage (71, 72) de ladite âme principale (20) et desdits fils conducteurs massifs (6) sont disposées dans ledit surmoulage (5) de sorte que ladite âme principale (20) et lesdits fils conducteurs massifs (6) les traversent par lesdits canaux de passage (71, 72) correspondants.

**5/** Jonction selon l'une des revendications 1 à 4, caractérisée en ce que, lorsque lesdits fils massifs (6) sont en cuivre, ledit surmoulage (5) est en "Desmopan".

**6/** Jonction selon l'une des revendications 1 à 4, caractérisée en ce que, lorsque lesdits fils massifs (6) sont en cuivre, ledit surmoulage (5) est réalisé dans un matériau choisi parmi le polychloroprène, les élastomères thermoplastiques, les polyoléfines, les polyamides, le polychlorure de vinyle, les polyuréthanes polyester, les polyuréthanes polyéter et une résine bicomposants surmoulable à froid.

**7/** Jonction selon l'une des revendications 1 à 6, caractérisée en ce que lesdites gaines d'étanchéité sont constituées d'une gaine intermédiaire d'étanchéité (22) en un matériau isolant entourée d'une armure (23) elle-même entourée d'une gaine extérieure d'étanchéité (24, 34) en un matériau isolant.

**8/** Jonction selon la revendication 7, caractérisée en ce que ladite gaine intermédiaire (23) et ladite gaine extérieure (24,34) sont en "Estane".

**9/** Jonction selon la revendication 7, caractérisée en ce que, lorsque ledit surmoulage (5) est en "Desmopan", ladite gaine extérieure (24, 34) est en "Estane".

**10/** Câble de mesure comportant:
- un câble principal comprenant une âme principale isolée par une gaine d'étanchéité et constituée chacun d'un toronnage de brins conducteurs principaux eux-mêmes constitués d'un toronnage de fils conducteurs,
- une pluralité de câbles de dérivation raccordant chacun, au niveau d'une jonction, ladite âme principale respectivement à un composant électronique, chacun desdits câbles de dérivation comprenant une âme secondaire isolée par une gaine d'étanchéité et constituée d'un toronnage de brins conducteurs secondaires eux-mêmes constitués chacun d'un toronnage de fils conducteurs,
- des surmoulages entourant chacune desdites jonctions ainsi qu'une portion dudit câble principal et dudit câble de dérivation de ladite jonction en débordant sur lesdites gaines d'étanchéité respectives dudit câble principal et dudit câble de dérivation, pour assurer l'étanchéité de ladite jonction, caractérisé en ce que chacun desdits brins secondaires est raccordé à l'un desdits brins principaux au moyen d'un fil conducteur massif.
